# EUROPÄISCHE PATENTSCHRIFT

(11) **EP 3 604 831 B1**
(45) Veröffentlichungstag und Bekanntmachung des Hinweises auf die Patenterteilung: **11.08.2021**
(21) Anmeldenummer: 19185074.2
(22) Anmeldetag: 08.07.2019
(51) Int. Cl.: F16B 13/12

(54) **VERBUNDABDICHTUNGS-DÜBEL**
COMPOUND SEAL BLANK
CHEVILLE D'ÉTANCHÉITÉ COMPOSITE

(30) Priorität: 03.08.2018 DE 202018003632 U
(43) Veröffentlichungstag der Anmeldung: 05.02.2020
(60) Teilanmeldung: 21181844.8
(73) Patentinhaber: Sopro Bauchemie GmbH, 65203 Wiesbaden (DE)
(72) Erfinder: Sommer, Mario, 65594 Runkel (DE)
(74) Vertreter: Diehl & Partner

(56) Entgegenhaltungen:
- DE-A1- 19 845 696

## Beschreibung

Die Erfindung betrifft einen Verbundabdichtungs-Dübel. Dabei wird unter einem Verbundabdichtungs-Dübel ein Schraubdübel verstanden, der zwischen einer Schraube und einem Baukörper, in dem der Schraubdübel angeordnet ist, insbesondere im Hinblick auf Feuchtigkeit und Flüssigkeiten eine Dichtwirkung entfaltet. Dabei durchdringt der Schraubdübel eine in dem Baukörper vorgesehene Verbundabdichtung und dichtet gegenüber dieser Verbundabdichtung zuverlässig und dauerhaft ab.

Ein Dübel mit Dichtwirkung ist aus der deutschen Offenlegungsschrift DE 198 45 696 A1 bekannt. Der vorbekannte Dübel weist am Dübelkopf oder in der Nähe des Dübelkopfes mindestens ein Abdichtmittel auf. Dieses Abdichtmittel besitzt sowohl einen Innenteil, das gegen ein in den Dübel eingeführtes Befestigungsmittel abdichtet, als auch ein Außenteil, das gegen eine Oberfläche in der Nähe des äußeren Randes einer den Dübel aufnehmenden Bohrung abdichtet. Das Abdichtmittel kann aus einem verformbaren Material, wie zum Beispiel Gummi bestehen. Alternativ kann es sich bei dem Abdichtmittel um ein Dichtkissen mit Silikon- Dichtgel- oder Dichtkittinhalt handeln, welches von einer feinen Haut oder Membran umschlossen ist

Gemäß der Normen DIN 19 531, DIN 19 532, DIN 19 533 und DIN 19 534 sind Bauwerke und Bauteile so zu planen und auszuführen, dass keine Schäden durch Wasser oder Feuchtigkeit entstehen. In der Folge ist die Bausubstanz durch geeignete Abdichtungsmaßnahmen zu schützen.

Hierfür werden häufig Verbundabdichtungssysteme mit einer Schutzschicht aus keramischen Belags- und Bekleidungsbaustoffen bzw. Natur- oder Betonwerksteinfliesen verwendet. Diese setzen sich in der Regel aus einer keramischen Fliese oder Platte, Fugenmörtel zwischen den Fliesen oder Platten, unter der Fliese oder Platte befindlichem Fliesenkleber und einer Abdichtung zusammen. Die Abdichtung ist in der Regel zwischen dem Fliesenkleber und einem Baukörper (einer Wand oder einem Boden, beispielsweise aus Ziegel oder Beton) angeordnet und mit dem Baukörper verklebt. Für die Abdichtung werden im Lieferzustand pulverförmige, pastöse, flüssige oder bahnenförmige Abdichtungsstoffe verwendet. Geeignete flüssige Abdichtungsstoffe können in unterschiedlichen Ausgestaltungen, beispielsweise unter den Bezeichnungen FlächenDicht flexibel (FDF), DichtSchlämme Flex (DSF), TurboDichtSchlämme (TDS) oder PU-FlächenDicht (PU-FD), von der Sopro Bauchemie GmbH, Wiesbaden, Deutschland bezogen werden. Geeignete bahnenförmige Abdichtungsstoffe können in unterschiedlichen Ausgestaltungen, beispielsweise unter der Bezeichnung Abdichtungs- und EntkopplungsBahn AEB (geschütztes Warenzeichen) oder Abdichtungs- und Entkopplungsbahn plus (geschütztes Warenzeichen), von der Sopro Bauchemie GmbH, Wiesbaden, Deutschland bezogen werden. Derartige bahnenförmige Abdichtungsstoffe bestehen beispielsweise aus reißfester Polypropylenfolie mit einer beidseitigen speziellen Vliesgewebebeschichtung aus Polypropylen und einer Dicke von ca. 0,3 mm bis 0,9 mm.

Eine besondere Problematik stellen bei Verbundabdichtungssystemen nachträglich eingebrachte Durchdringungen wie insbesondere Bohrlöcher dar, da diese die Verbundabdichtung typischerweise bis hin zum Baukörper durchdringen. Auch bei derartigen nachträglich eingebrachten Durchdringungen muss die Dichtigkeit des Verbundabdichtungssystems gewährleistet werden.

Es besteht daher ein Bedarf daran, Mittel bereitzustellen, welche eine Abdichtung von nachträglich in Verbundabdichtungssystemen eingebrachten Durchdringungen auf einfache und zuverlässige Weise ermöglichen. Gemäß einer Ausführungsform sollten die Mittel auch nach Durchdringung des Verbundabdichtungssystems eine für eine jeweilige Beanspruchungsklasse gegen Wasser oder Feuchtigkeit geforderte Dichtigkeit sicher erfüllen.

Die vorstehende Aufgabe wird durch einen Verbundabdichtungs-Dübel mit den Merkmalen der unabhängigen Ansprüche gelöst. Bevorzugte Weiterbildungen finden sich in den abhängigen Ansprüchen.

Gemäß aller Ausführungsformen wird ein Verbundabdichtungs-Dübel (Schraubdübel) mit einem hohlzylindrischen Grundkörper bereitgestellt. Dabei muss der hohlzylindrische Grundkörper kein im mathematischen Sinn perfekter Hohlzylinder sein. Zudem kann der Hohlzylinder einseitig geschlossen und am geschlossenen Ende verrundet sein. Auch ist es zulässig, dass eine Mantelfläche des Hohlzylinders Durchdringungen, Vertiefungen oder Vorsprünge aufweist. Dabei weist der Grundkörper in axialer Richtung an einem ersten Ende eine Öffnung zur Aufnahme einer Schraube auf. Beim Eindrehen der Schraube spreizt sich der Verbundabdichtungs-Dübel. Durch Kraftschluss zwischen Verbundabdichtungs-Dübel und umgebenden Material ist die Schraube gegen Herausziehen gesichert. Weiter formt die Schraube im inneren Teil des Verbundabdichtungs-Dübels ein Gegengewinde, wobei sie das Material, aus dem der Verbundabdichtungs-Dübel gebildet ist, plastisch verformt und zusätzlich radial nach außen verdrängt und so den Verbundabdichtungs-Dübel spreizt.

Gemäß einer nicht von den Ansprüchen umfassten ersten Ausführungsform weist der Grundkörper in axialer Richtung einen ersten Abschnitt und einen zweiten Abschnitt auf, wobei der erste Abschnitt zwischen dem zweiten Abschnitt und dem ersten Ende des Grundkörpers angeordnet ist. An seiner radial außenliegenden Mantelfläche weist der Grundkörper im ersten Abschnitt einen elastischen Dichtstoff auf. Im zweiten Abschnitt ist der Grundkörper an seiner radial außenliegenden Mantelfläche hingegen frei von dem elastischen Dichtstoff. Dabei ist der elastische Dichtstoff aus einem Material gebildet, welches sich von dem Material, aus welchem der Grundkörper gebildet ist, unterscheidet. Somit werden die ersten und zweiten Abschnitte durch das Vorhandensein bzw. die Abwesenheit von elastischem Dichtstoff festgelegt. Beim Einschrauben einer Schraube in den Verbundabdichtungs-Dübel wird der elastische Dichtstoff radial nach außen gedrückt. Freie Räume in einer Durchdringung, in welche der Verbundabdichtungs-Dübel eingesetzt ist, werden vom elastischen Dichtstoff ausgefüllt, wodurch die Durchdringung gegenüber dem Verbundabdichtungs-Dübel und der Schraube abgedichtet wird. Weiter entsteht so auch ein Formschluss gegen Herausziehen des Verbundabdichtungs-Dübels.

Durchsetzt die Durchdringung dabei eine Verbundabdichtung, die wie vorstehend beschrieben aus einer Schutzschicht aus einer keramischen Fliese oder Platte bzw. einem Natur- oder Betonwerkstein, Fugenmörtel zwischen den Fliesen oder Platten, unter der Fliese oder Platte befindlichem Fliesenkleber und einer Abdichtung gebildet ist, bewirkt der im ersten Abschnitt vorhandene elastische Dichtstoff eine Dichtwirkung, welche in axialer Richtung des Verbundabdichtungs-Dübels die Abdichtung der Verbundabdichtung und Abschnitte zu beiden Seiten der Abdichtung umfasst und somit schichtübergreifend wirkt.

Gemäß einer Variante der nicht von den Ansprüchen umfassten ersten Ausführungsform weist das den Grundkörper bildende Material im ersten Abschnitt an der radial außenliegenden Mantelfläche des Grundkörpers einen sich in axialer und radialer Richtung erstreckenden Rücksprung auf, in welchen der elastische Dichtstoff ganz oder teilweise eingesetzt ist. Da ein Rücksprung gegenüber der benachbarten radial außenliegenden Mantelfläche des Grundkörpers radial nach innen zurückversetzt ist, ist es durch ganzes oder teilweises Einsetzen des elastischen Dichtstoffes möglich, die Lage des elastischen Dichtstoffes in axialer Richtung des Grundkörpers zu fixieren. Weiter ist es hierdurch möglich, sicherzustellen dass eine radial außenliegende Mantelfläche des elastischen Dichtstoffes mit der radial außenliegenden Mantelfläche des Grundkörpers fluchtet (was bedeutet, dass beide Flächen bündig sind) oder gegenüber dieser nur geringfügig vorspringt. Dabei soll unter *"geringfügig"* verstanden werden, dass die radial außenliegende Mantelfläche des elastischen Dichtstoffes gegenüber der radial außenliegenden Mantelfläche des Grundkörpers um weniger als die mittlere Wandstärke des Grundkörpers vorspringt und insbesondere um weniger als die Hälfte der mittleren Wandstärke des Grundkörpers vorspringt. Gemäß einer Ausführungsform springt die radial außenliegende Mantelfläche des elastischen Dichtstoffes gegenüber der radial außenliegenden Mantelfläche des Grundkörpers um weniger als 1 mm und insbesondere um weniger als 0,5 mm vor. Der Begriff *"eingesetzt"* soll dabei sowohl ein nachträgliches Einsetzten eines separaten elastischen Dichtstoffes in Form eines Ringes als auch ein Umspritzen des Grundkörpers mit dem elastischen Dichtstoff umfassen.

Gemäß einer Variante der nicht von den Ansprüchen umfassten ersten Ausführungsform ist die mittlere Dicke der Außenwand des Grundkörpers der radiale Abstand zwischen einem von einer radial außenliegenden Mantelfläche des Grundkörpers festgelegten kleinsten Kreis zu einem von einer radial innenliegenden Mantelfläche des Grundkörpers festgelegten größten Kreis, wobei die Mittelpunkte beider Kreise zusammenfallen.

Gemäß einer Variante der nicht von den Ansprüchen umfassten ersten Ausführungsform erstreckt sich der Rücksprung in axialer Richtung über den ganzen ersten Abschnitt des Grundkörpers, was bedeutet, dass der elastische Dichtstoff über seine ganze axiale Erstreckung in den Rücksprung im Grundkörper eingesetzt ist.

Gemäß einer alternativen Variante der nicht von den Ansprüchen umfassten ersten Ausführungsform erstreckt sich der Rücksprung in axialer Richtung über zwischen 20 % und 90% oder über zwischen 40 % und 85% oder über zwischen 60 % und 80% des ersten Abschnitts des Grundkörpers, was bedeutet, dass der elastische Dichtstoff bezogen auf seine axiale Erstreckung nur teilweise in den Rücksprung im Grundkörper eingesetzt ist.

Gemäß einer Variante der nicht von den Ansprüchen umfassten ersten Ausführungsform erstreckt sich der Rücksprung in Umfangsrichtung vollständig um den Grundkörper herum; dann ist der eingesetzte elastische Dichtstoff für sich alleine betrachtet ringförmig.

Gemäß einer Variante der nicht von den Ansprüchen umfassten ersten Ausführungsform beträgt eine Tiefe des Rücksprungs im ersten Abschnitt in radialer Richtung zwischen 0,25 mm und 2,5 mm oder zwischen 0,5 mm und 2,25 mm oder zwischen 1,0 mm und 2,0 mm. Ein Rücksprung mit einer solchen Tiefe stellt sicher, dass ausreichend elastischer Dichtstoff um den Grundkörper herum angeordnet werden kann, um die beabsichtigte Dichtwirkung zu erzielen.

Gemäß einer Variante der nicht von den Ansprüchen umfassten ersten Ausführungsform weist der Grundkörper im ersten Abschnitt an seiner radial innenliegenden Mantelfläche einen sich in radialer und axialer Richtung erstreckenden Vorsprung auf. Indem der Grundkörper im Bereich des elastischen Dichtstoffes einen sich radial nach innen erstreckenden Vorsprung aufweist, wird sichergestellt, dass im Bereich des elastischen Dichtstoffes beim Eindrehen einer Schraube besonders viel Material radial nach außen verdrängt wird.

Gemäß einer Variante der nicht von den Ansprüchen umfassten ersten Ausführungsform erstreckt sich der Vorsprung in axialer Richtung über den ganzen ersten Abschnitt des Grundkörpers, und ist in der Folge in axialer Richtung an gleicher Position wie der elastische Dichtstoff angeordnet.

Gemäß einer alternativen Variante der nicht von den Ansprüchen umfassten ersten Ausführungsform erstreckt sich der Vorsprung in axialer Richtung über zwischen 25 % und 95% oder über zwischen 45 % und 90% oder über zwischen 65 % und 85% des ersten Abschnitts des Grundkörpers. Der Vorsprung kann in axialer Richtung des Grundkörpers entweder eine geringere Erstreckung als der elastische Dichtstoff aufweisen und vollständig im ersten Abschnitt liegen oder auch gegenüber dem ersten Abschnitt in axialer Richtung versetzt sein. Falls der Vorsprung gegenüber dem ersten Abschnitt in axialer Richtung versetzt ist, kann der Vorsprung sogar größer als der erste Abschnitt sein.

Gemäß einer Variante der nicht von den Ansprüchen umfassten ersten Ausführungsform erstreckt sich der Vorsprung in Umfangsrichtung vollständig innerhalb des Grundkörpers herum. Gemäß einer alternativen Ausführungsform sind in Umfangsrichtung verteilt mehrere voneinander getrennte Vorsprünge vorgesehen. Die Verwendung von mehreren in Umfangsrichtung verteilt angeordneten Vorsprüngen vermeidet zu große Wandstärken des Grundkörpers.

Gemäß einer Variante der nicht von den Ansprüchen umfassten ersten Ausführungsform beträgt eine Höhe des Vorsprungs in radialer Richtung gegenüber der radial innenliegenden Mantelfläche des Grundkörpers zwischen 0,25 mm und 2,5 mm oder zwischen 0,5 mm und 2,25 mm oder zwischen 1,0 mm und 2,0 mm. Gemäß einer Ausführungsform ist die Höhe des Vorsprungs in radialer Richtung kleiner oder gleich der Dicke es elastischen Dichtstoffs in radialer Richtung.

Gemäß einer Variante der nicht von den Ansprüchen umfassten ersten Ausführungsform weist der Grundkörper im ersten Abschnitt an seiner radial innenliegenden Mantelfläche ebenfalls einen elastischen Dichtstoff auf. Indem der Grundkörper auch in seinem Inneren einen elastischen Dichtstoff aufweist, wird die Dichtwirkung gegenüber einer in den Verbundabdichtungs-Dübel eingedrehten Schraube verbessert.

Gemäß einer Variante der nicht von den Ansprüchen umfassten ersten Ausführungsform erstreckt sich der im ersten Abschnitt an der radial innenliegenden Mantelfläche angeordnete elastische Dichtstoff in axialer Richtung über den ganzen ersten Abschnitt des Grundkörpers.

Gemäß einer Variante der nicht von den Ansprüchen umfassten ersten Ausführungsform umgibt der elastische Dichtstoff den Grundkörper an seiner radial außenliegenden Mantelfläche und/oder an seiner radial innenliegenden Mantelfläche in Umfangsrichtung des Grundkörpers vollständig, und bildet so jeweils einen Ring.

Gemäß einer Variante der nicht von den Ansprüchen umfassten ersten Ausführungsform ist der elastische Dichtstoff ein Elastomerkörper, der den Grundkörper an seiner radial außenliegenden Mantelfläche und/oder an seiner radial innenliegenden Mantelfläche in Umfangsrichtung des Grundkörpers vollständig umgibt, und so einen Ring bildet. Gemäß einer Ausführungsform ist der Elastomerkörper eine Kautschuk-Art, Perfluorkautschuk (FFKM oder FFPM), Polyethylen (PE) oder Polytetrafluorethylen (PTFE).

Gemäß einer von den Ansprüchen umfassten zweiten Ausführungsform, welche auch mit der vorstehenden ersten Ausführungsform kombiniert werden kann, weist der hohlzylindrische Grundkörper des Verbundabdichtungs-Dübels mit der Öffnung für die Schraube in seinem Inneren einen pastösen Dichtstoff auf. Da der Grundkörper von Verbundabdichtungs-Dübeln typischerweise nicht aus pastösem Material besteht, ist der Dichtstoff somit aus einem Material gebildet, welches sich von dem Material, aus welchem der Grundkörper gebildet ist, unterscheidet. Weiter weist eine Außenwand des Grundkörpers mehrere Durchbrüche und/oder Schwächungen auf. Dabei wird unter einer *"Schwächung"* gemäß einer Ausführungsform ein Bereich verstanden, in dem eine Dicke der Außenwand um wenigstens 50 % und insbesondere um wenigstens 75% und weiter insbesondere um wenigstens 90% gegenüber der mittleren Dicke der Außenwand an dieser Stelle reduziert ist. Beim Eindrehen einer Schraube in die Öffnung des Verbundabdichtungs-Dübels wird der pastöse Dichtstoff durch die Durchbrüche / Schwächungen in der Außenwand des Grundkörpers hindurch aus dem Inneren des Grundkörpers radial nach außerhalb des Grundkörpers gedrückt. In der Folge werden freie Räume in einer Durchdringung, in welche der Verbundabdichtungs-Dübel eingesetzt ist, vom pastösen Dichtstoff ausgefüllt, wodurch die Durchdringung gegenüber dem Verbundabdichtungs-Dübel und der Schraube abgedichtet wird.

Durchsetzt die Durchdringung dabei eine Verbundabdichtung, bewirkt der nach außerhalb des Grundkörpers gepresste pastöse Dichtstoff eine Dichtwirkung, welche in axialer Richtung des Verbundabdichtungs-Dübels die Verbundabdichtung und Abschnitte zu beiden Seiten der Verbundabdichtung umfasst und somit schichtübergreifend wirkt. Gleichzeitig bewirkt im Inneren des Grundkörpers verbleibender pastöser Dichtstoff eine gute Abdichtung gegenüber einer in den Verbundabdichtungs-Dübel eingedrehten Schraube.

Gemäß einer Ausführungsform ist der Verbundabdichtungs-Dübel außerhalb des Grundkörpers frei von pastösem Dichtstoff.

Gemäß einer Ausführungsform ist der pastöse Dichtstoff in einem in axialer Richtung des hohlzylindrischen Grundkörpers mit der Öffnung für die Schraube ersten Ende vorgesehen.

Gemäß einer Ausführungsform ist der hohlzylindrische Grundkörper in axialer Richtung vollständig oder zu wenigstens 2/3 oder zu wenigstens der Hälfte oder zu wenigstens einem Drittel mit dem pastösen Dichtstoff gefüllt.

Gemäß einer Ausführungsform sind die Durchbrüche und/oder Schwächungen voneinander in Umfangsrichtung beabstandet.

Gemäß einer Ausführungsform sind die Durchbrüche und/oder Schwächungen in Umfangsrichtung gleichmäßig um den Grundkörper herum verteilt angeordnet. Dabei sind die Durchbrüche Langlöcher, deren Längsachsen in axialer Richtung des Grundkörpers orientiert sind oder mit der axialen Richtung des Grundkörpers einen Winkel von zwischen 5 ° und 60 ° einschließen oder mit der axialen Richtung des Grundkörpers einen Winkel von zwischen 5 ° und 30 ° einschließen. Weiter sind die Schwächungen Langnuten, deren Längsachsen in axialer Richtung des Grundkörpers orientiert sind oder mit der axialen Richtung des Grundkörpers einen Winkel von zwischen 5 ° und 60 ° einschließen oder mit der axialen Richtung des Grundkörpers einen Winkel von zwischen 5 ° und 30° einschließen. Durch die weitgehend axiale Orientierung der Durchbrüche / Schwächungen wird eine Herabsetzung der von dem Verbundabdichtungs-Dübel in axialer Richtung aufnehmbaren Zugkraft gering gehalten.

Gemäß einer Ausführungsform weist der Grundkörper eine erste Trennwand auf, welche zwischen dem pastösen Dichtstoff und dem ersten Ende des Grundkörpers angeordnet ist und den pastösen Dichtstoff gegenüber der Öffnung des Grundkörpers abschließt. Auf diese Weise kann ein Austrocknen oder Aushärten des pastösen Dichtstoffes vermieden werden. Gemäß einer Ausführungsform ist die erste Trennwand einstückig mit dem Grundkörper gebildet. Gemäß einer alternativen Ausführungsform ist die erste Trennwand in den Grundkörper eingepresst oder eingeklebt oder eingeschweißt oder eingelegt. Es wird betont, dass die Trennwand auch die Form eines Pfropfens aufweisen und so ausgebildet sein kann, dass sie aus dem Grundkörper entfernt werden kann.

Gemäß einer Ausführungsform weist der Grundkörper eine zweite Trennwand auf, welche in axialer Richtung von der ersten Trennwand beabstandet ist. Dann kann der pastöse Dichtstoff zwischen der ersten Trennwand und der zweiten Trennwand angeordnet sein. In diesem Fall dienen die beiden Trennwände zur Begrenzung des Abschnitts, in welchem der pastöse Dichtstoff vorhanden ist. Gemäß einer Ausführungsform ist die zweite Trennwand einstückig mit dem Grundkörper gebildet. Gemäß einer alternativen Ausführungsform ist die zweite Trennwand in den Grundkörper eingepresst oder eingeklebt oder eingeschweißt oder eingelegt.

Gemäß einer Ausführungsform ist eine Dicke der (ersten und/oder zweiten) Trennwand gegenüber einer mittleren Dicke der Außenwand des Grundkörpers um wenigstens 50 % oder um wenigstens 75% oder um wenigstens 90% reduziert. Auf diese Weise ist sichergestellt, dass die (erste und/oder zweite) Trennwand leicht von einer Schraube durchdrungen werden können. Gemäß einer Ausführungsform ist die Dicke der zweiten Trennwand größer oder gleich der Dicke der ersten Trennwand.

Gemäß einer Ausführungsform ist der pastöse Dichtstoff ein Butylkautschuk-Dichtstoff oder ein Polysulfid-Dichtstoff oder ein Silikon-Dichtstoff oder ein Polyurethan-Dichtstoff oder ein MS-Polymer-Dichtstoff oder ein Harz. Derartige Materialien sind sicher zu verarbeiten, lassen sich gut mit Verbundabdichtungssystemen kombinieren und weisen gute und dauerhafte Dichtungseigenschaften auf.

Gemäß einer Ausführungsform weist der Grundkörper in axialer Richtung einen Abschnitt auf, in dem der Grundkörper frei von Dichtstoff ist, wobei dieser Abschnitt an das erste Ende des Grundkörpers angrenzt und sich von dem ersten Ende um zwischen 1 mm und 10 mm oder um zwischen 2,5 mm und 8 mm oder um zwischen 3 mm und 6 mm in axialer Richtung erstreckt. Auf diese Weise wird vermieden, dass der Dichtstoff nach außerhalb einer Durchdringung, in welche der Verbundabdichtungs-Dübel eingesetzt ist, dringt.

Gemäß einer Ausführungsform erstreckt sich der Abschnitt des Grundkörpers, in welchem der Grundkörper Dichtstoff aufweist, über zwischen 5 mm und 30 mm oder über zwischen 7 mm und 20 mm oder über zwischen 10 mm und 15 mm in axialer Richtung.

Gemäß einer Ausführungsform erstreckt sich der Abschnitt des Grundkörpers, in welchem der Grundkörper Dichtstoff aufweist, in axialer Richtung über zwischen 20 % und 70 % der Gesamtlänge des Grundkörpers oder über zwischen 30 % und 60 % der Gesamtlänge des Grundkörpers oder über zwischen 40 % und 50 % der Gesamtlänge des Grundkörpers.

Auf diese Weise ist der Verbundabdichtungs-Dübel gut zur Abdichtung von in Verbundabdichtungssystemen eingebrachten Durchdringungen angepasst, da eine derartige axiale Erstreckung des Dichtstoffs schichtübergreifend wirken kann, indem in axialer Richtung des Verbundabdichtungs-Dübels im Bereich der Abdichtung der Verbundabdichtung und zu beiden Seiten der Abdichtung Dichtstoff angeordnet ist.

Gemäß einer Ausführungsform ist der Grundkörper aus Kunststoff und insbesondere aus Polyamid oder aus Metall gebildet.

Gemäß weiterer von den Ansprüchen umfasster Ausführungsformen, die mit den vorstehenden Ausführungsformen kombiniert werden können, weist ein Verbundabdichtungs-Dübel einen hohlzylindrischen Grundkörper mit einer an einem in axialer Richtung ersten Ende angeordneten Öffnung zur Aufnahme einer Schraube auf. Dabei weist der Grundkörper an seinen radial innenliegenden und radial außenliegenden Außenflächen jeweils Elastomer-Schichten auf, die sowohl in axialer Richtung als auch in Umfangsrichtung des Verbundabdichtungs-Dübels durchgehend ausgebildet sind. Gemäß einer Ausführungsform beträgt eine Erstreckung des hohlzylindrischen Grundkörpers in axialer Richtung wenigstens 10 mm oder wenigstens 15 mm.

Aufgrund seiner Elastomer-Schichten weist der Verbundabdichtungs-Dübel gute Dichteigenschaften sowohl gegenüber einer Innenwand der Durchdringung als auch gegenüber einer über die Öffnung im Grundkörper eingeführten Schraube auf. Durchsetzt die Durchdringung dabei eine Verbundabdichtung, die wie vorstehend beschrieben aus einer keramischen Fliese oder Platte, Fugenmörtel zwischen den Fliesen oder Platten, unter der Fliese oder Platte befindlichem Fliesenkleber und einer Abdichtung gebildet sein kann, bewirkt die an der radial außenliegenden Außenfläche vorhandene Elastomer-Schicht eine Dichtwirkung, welche in axialer Richtung des Verbundabdichtungs-Dübels die Abdichtung der Verbundabdichtung und Abschnitte zu beiden Seiten der Abdichtung umfasst und somit schichtübergreifend wirkt.

Erfindungsgemäß weist der Grundkörper bei diesen Ausführungsformen zwischen seinen radial innenliegenden und radial außenliegenden Elastomer-Schichten eine Schicht aus Polyamid oder Metall auf. Ein solcher Kern erhöht die Stabilität des Verbundabdichtungs-Dübels erheblich und erleichtert so ein Einführen des Verbundabdichtungs-Dübels entlang seiner axialen Richtung in eine Durchdringung. Weiter verhindert ein solcher Kern, dass die Elastomer-Schichten durch eine Schraube versehentlich in radialer Richtung ganz durchdrungen werden.

Gemäß einer Ausführungsform beträgt die Dicke jeder Elastomer-Schicht in radialer Richtung zwischen 1 mm und 3 mm oder zwischen 1,5 mm und 2 mm.

Gemäß einer Ausführungsform beträgt die Dicke der Schicht aus Polyamid oder Metall in radialer Richtung zwischen 0,25 mm und 1,5 mm oder zwischen 0,4 mm und 0,8 mm.

Gemäß einer Ausführungsform weist der Grundkörper in einem Abschnitt, der optional frei von Dichtstoff ist, wenigstens ein Paar von in axialer Richtung verlaufenden Schlitzen auf, welche eine Mantelfläche des Grundkörpers durchdringen. Diese Schlitze erleichtern ein Aufspreizen des Verbundabdichtungs-Dübels in dem Abschnitt.

Gemäß einer Ausführungsform weist der Grundkörper in einem Abschnitt, der optional frei von Dichtstoff ist, auf seiner radial außenliegenden Mantelfläche in Umfangsrichtung orientierte Rillen auf, welche sich in axialer Richtung mit in Umfangsrichtung orientierten Vorsprüngen abwechseln. Eine derartige Oberfläche kann sich gut mit der Innenwand einer Durchdringung, in welche der Verbundabdichtungs-Dübel eingesetzt ist, verzahnen.

Gemäß einer Ausführungsform weist der Grundkörper an seinem ersten Ende benachbart zur Öffnung einen radial nach außen gerichteten Flansch auf. Ein solcher Flansch verhindert, dass der Verbundabdichtungs-Dübel zu tief in eine Durchdringung eingesetzt wird. Zudem schließt ein solcher Flansch die Durchdringung optisch ab.

Gemäß einer Ausführungsform ist der Grundkörper an seinem dem ersten Ende in axialer Richtung gegenüberliegenden zweiten Ende geschlossen. Dabei kann dieses zweite Ende auch verrundet sein, um ein Einführen des Verbundabdichtungs-Dübels in eine Durchdringung zu erleichtern.

Ausführungsformen eines Verfahrens zur Abdichtung einer Durchdringung durch ein Verbundabdichtungssystem weisen die Schritte des Bereitstellens eines Verbundabdichtungs-Dübels wie vorstehend beschrieben, des Einsetzens des Verbundabdichtungs-Dübels in die Durchdringung, des Bereitstellens einer Schraube und des Einschraubens der Schraube in den Grundkörper des Verbundabdichtungs-Dübels auf. Dabei ist ein Außendurchmesser des Grundkörpers des Verbundabdichtungs-Dübels an einen Innendurchmesser der Durchdringung und ein Außendurchmesser der Schraube an einen Innendurchmesser des Grundkörpers des Verbundabdichtungs-Dübels angepasst.

Der vorstehend beschriebene Verbundabdichtungs-Dübel ist besonders gut für eine Verwendung zur Abdichtung einer Durchdringung durch ein Verbundabdichtungssystem geeignet, da Dichtstoff in axialer Richtung des Verbundabdichtungs-Dübels im Bereich der Abdichtung der Verbundabdichtung und zu beiden Seiten der Abdichtung angeordnet ist und ein derartiger Verbundabdichtungs-Dübel somit schichtübergreifend wirken kann.

Ausführungsformen eines Systems zur Abdichtung einer Durchdringung durch ein Verbundabdichtungssystem, weisen einen in die Durchdringung eingesetzten Verbundabdichtungs-Dübel und eine in den Verbundabdichtungs-Dübel eingedrehte Schraube auf. Dabei sind der Verbundabdichtungs-Dübel und die Schraube gemeinsam ausgebildet, eine für eine jeweilige Beanspruchungsklasse des Verbundabdichtungssystems geforderte Dichtigkeit auch im Bereich der Durchdringung sicherzustellen. Bei dem Verbundabdichtungs-Dübel handelt es sich um den vorstehend beschriebenen, von den Ansprüchen umfassten Verbundabdichtungs-Dübel.

Ausführungsformen der Erfindung werden nachfolgend anhand von Figuren näher erläutert. Hierbei zeigt:
- Figuren 1A und 1C: Schnittansichten durch einen Verbundabdichtungs-Dübel gemäß einer nicht von den Ansprüchen umfassten ersten Ausführungsform in unterschiedlichen Betriebszuständen;
- Figur 1B: eine Querschnittsansicht entlang der Schnittlinie A-A durch den Aufbau aus Figur 1A;
- Figuren 2A und 2B: Schnittansichten und Querschnittsansichten durch einen Verbundabdichtungs-Dübel gemäß einer von den Ansprüchen umfassten zweiten Ausführungsform in unterschiedlichen Betriebszuständen; und
- Figuren 3A und 3B: Schnittansichten und Querschnittsansichten durch einen Verbundabdichtungs-Dübel gemäß einer von den Ansprüchen umfassten dritten Ausführungsform in unterschiedlichen Betriebszuständen.

In den Figuren werden gleiche oder ähnliche Elemente mit den gleichen oder ähnlichen Bezugszeichen bezeichnet.

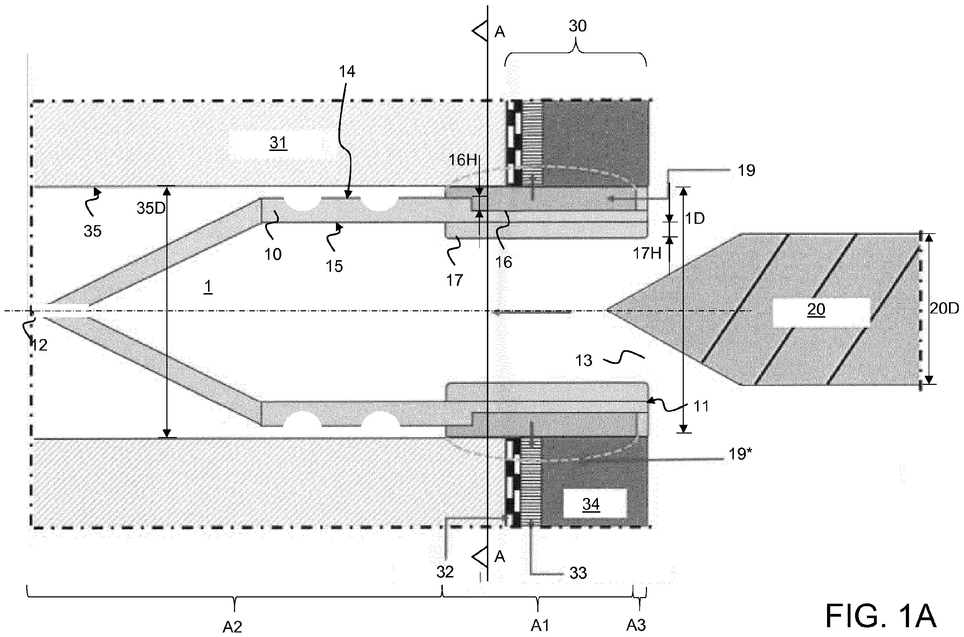

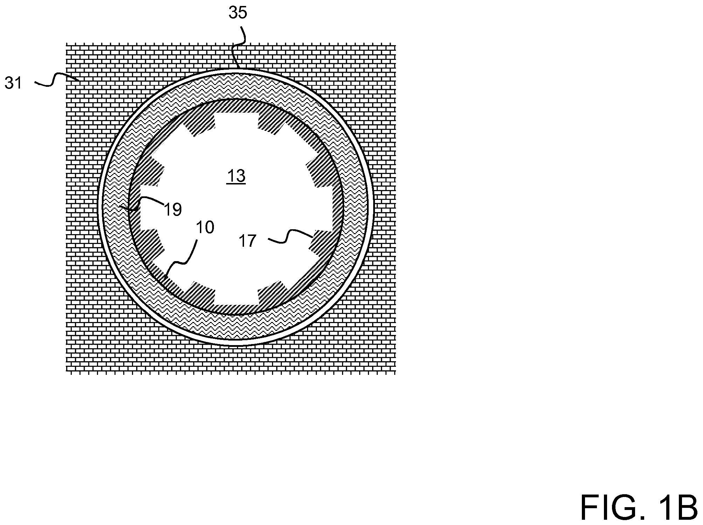

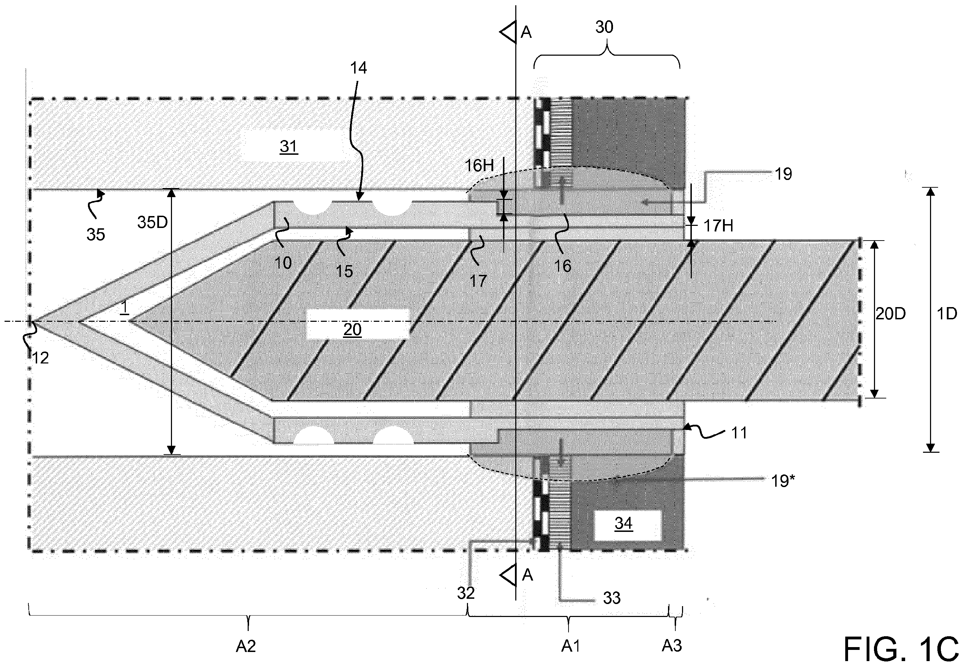

Figuren 1A bis 1C zeigen eine nicht von den Ansprüchen umfasste erste Ausführungsform eines Verbundabdichtungs-Dübels 1, welcher zur Abdichtung einer Durchdringung 35, wie beispielsweise eines Bohrloches, durch ein Verbundabdichtungssystem 30 geeignet ist. Dabei zeigt die Figur 1A eine Schnittansicht entlang der Längsachse des Verbundabdichtungs-Dübels vor einem Eindrehen einer Schraube 20 und Figur 1C die gleiche Schnittansicht nach Eindrehen der Schraube 20. Figur 1B zeigt eine Querschnittsansicht durch die Ansicht aus Figur 1A entlang der Schnittlinie A-A.

Das in dieser nicht von den Ansprüchen umfassten Ausführungsform gezeigte Verbundabdichtungssystem 30 weist eine 0,5 mm starke Abdichtungsbahn 32 auf, welche auf einen Baukörper in Form einer Mauer 31 aufgebracht ist. Die Abdichtungsbahn 32 trägt mittels einer 3 mm starken Schicht Fliesenkleber 33 Fliesen 34 mit einer Stärke von 10 mm. Die Durchdringung 34, welche in der gezeigten Ausführungsform einen Innendurchmesser 34D von 10 mm aufweist, durchdringt die Abdichtungsbahn 32, den Fliesenkleber 33 und die Fliesen 34 vollständig und dringt in die Mauer 31 ein.

Der Verbundabdichtungs-Dübel 1 wird im Wesentlichen von einem hohlzylindrischen Grundkörper 10 aus Polyamid gebildet.

An seinem ersten Ende 11 weist der Grundkörper 10 eine Öffnung 13 für die Schraube 20 auf.

In axialer Richtung des Grundkörpers 10 schließt sich an das erste Ende 11 ein Abschnitt A3 an, in welchem der Grundkörper 10 einen radial nach außen gerichteten Flansch aufweist. Dieser Abschnitt A3 erstreckt sich in der gezeigten Ausführungsform um 1 mm in axialer Richtung.

An diesen flanschbildenden Abschnitt A3 schließt sich ein (erster) Abschnitt A1 an, in dem der Grundkörper 10 an seiner radial außenliegenden Mantelfläche 14 einen elastischen Dichtstoff in Form eines ringförmigen Elastomerkörpers 19 aus Kautschuk aufweist. Dieser ringförmige Elastomerkörper 19 erstreckt sich in axialer Richtung des Grundkörpers über 12 mm und weist somit eine größere Längserstreckung als die Dicke der Verbundabdichtung 30 auf. Der ringförmige Elastomerkörper 19 ist in axialer Richtung zu 90% in einen Rücksprung 16 eingesetzt, der an der radial außenliegenden Mantelfläche 14 des Grundkörpers 10 ausgebildet ist und sich in Umfangsrichtung ganz um den Grundkörper 10 herum erstreckt. In der gezeigten Ausführungsform beträgt eine Tiefe 16H des Rücksprungs gegenüber der angrenzenden Mantelfläche 14 des Grundkörpers 10 rund 1 mm. Auf diese Weise fixiert der Rücksprung 16 die Lage des Elastomerkörpers 19 relativ zum Grundkörper 10. Ersichtlich wird in der gezeigten Ausführungsform das dem ersten Ende 11 des Grundkörpers 10 zugewandte Ende des Rücksprungs 16 von dem Flansch begrenzt.

An den von dem ringförmigen Elastomerkörper 19 festgelegten (ersten) Abschnitt A1 schließt sich in axialer Richtung des Grundkörpers 10 ein (zweiter) Abschnitt A2 an, der frei von dem Elastomerkörper 19 ist, und an dessen dem ersten Ende 11 in axialer Richtung des gegenüberliegenden zweiten Ende 12 der Grundkörper 10 geschlossen ist und eine Spitze aufweist. Die Spitze erleichtert ein Einführen des Grundkörpers 10 in die Durchdringung 35. Um ein Aufspreizen des Grundkörpers 10 bei eingeführter Schraube 20 zu begünstigen wird die Mantelfläche des Grundkörpers 10 von einem Paar in axialer Richtung orientierter Schlitze durchsetzt; diese sind in den Figuren 1A und 1C im Bereich der Spitze des Grundkörpers 10 zu sehen. Um zudem eine Verzahnung mit der Mauer 31 bei eingeführter Schraube 20 zu verbessern, weist der Grundkörper 10 in diesem Abschnitt A2 auf seiner radial außenliegenden Mantelfläche in Umfangsrichtung orientierte Rillen auf, welche sich in axialer Richtung mit in Umfangsrichtung orientierten Vorsprüngen abwechseln.

In dieser nicht von den Ansprüchen umfassten ersten Ausführungsform weist der Grundkörper 10 in dem von dem ringförmigen Elastomerkörper 19 festgelegten (ersten) Abschnitt A1 an seiner radial innenliegenden Mantelfläche 15 Vorsprünge 17 auf, die sich in radialer Richtung gegenüber der benachbarten Mantelfläche 15 um eine Höhe 17H von 1 mm und in axialer Richtung über die ganze Länge des ringförmigen Elastomerkörpers 19 erstrecken.

Aus Figur 1B ist gut ersichtlich, dass acht Vorsprünge 17 gleichmäßig in Umfangsrichtung des Grundkörpers 10 verteilt angeordnet und einstückig mit dem Grundkörper 10 ausgebildet sind. Es wird betont, dass in der in Figur 1B gezeigten Querschnittsansicht der besseren Übersichtlichkeit wegen nur die Öffnung 13 des Grundkörpers 10 für die Schraube 20 gezeigt ist, und nicht die in axialer Richtung beabstandet zur Schnittlinie A-A kommende Innenwand der Spitze des Grundkörpers 10.

Wie sich aus einer Zusammenschau der Figuren 1A und 1C ergibt, begünstigen die Vorsprünge 17, dass der ringförmige Elastomerkörper 19 beim Einschrauben der Schraube 20 in den Verbundabdichtungs-Dübel 1 radial nach außerhalb des Grundkörpers 10 gedrückt wird und so eine Pressdichtung zur Durchdringung 35 und insbesondere zur Verbundabdichtung 30 herstellt. Dabei dringt der ringförmige Elastomerkörper 19 in Spalten und Ritzen in der Durchdringung 35 ein, was in Figur 1C symbolisch durch den mit dem Bezugszeichen 19* gekennzeichneten Bereich verdeutlicht wird. Da der ringförmige Elastomerkörper 19 nicht nur im Bereich der Abdichtungsbahn 32 der Verbundabdichtung 30, sondern in axialer Richtung der Durchdringung 35 zu beiden Seiten der Abdichtungsbahn 32 angeordnet ist, wirkt der Verbundabdichtungs-Dübel 1 schichtübergreifend. Ersichtlich ist hierfür ein Außendurchmesser 1D des Verbundabdichtungs-Dübels 1 an einen Innendurchmesser 35D der Durchdringung 35 und ein Außendurchmesser 20D der Schraube 20 an einen Innendurchmesser des Verbundabdichtungs-Dübels 1 anzupassen. Zusätzlich zu dem an der radial außenliegenden Mantelfläche 14 des Grundkörpers 10 vorgesehenen ringförmigen Elastomerkörper 19 kann auch an der radial innenliegenden Mantelfläche des Grundkörpers 10 ein ringförmiger Elastomerkörper vorgesehenen sein, der die Abdichtung gegenüber der Schraube bereitstellt. Dies ist in den Figuren aber nicht eigens gezeigt.

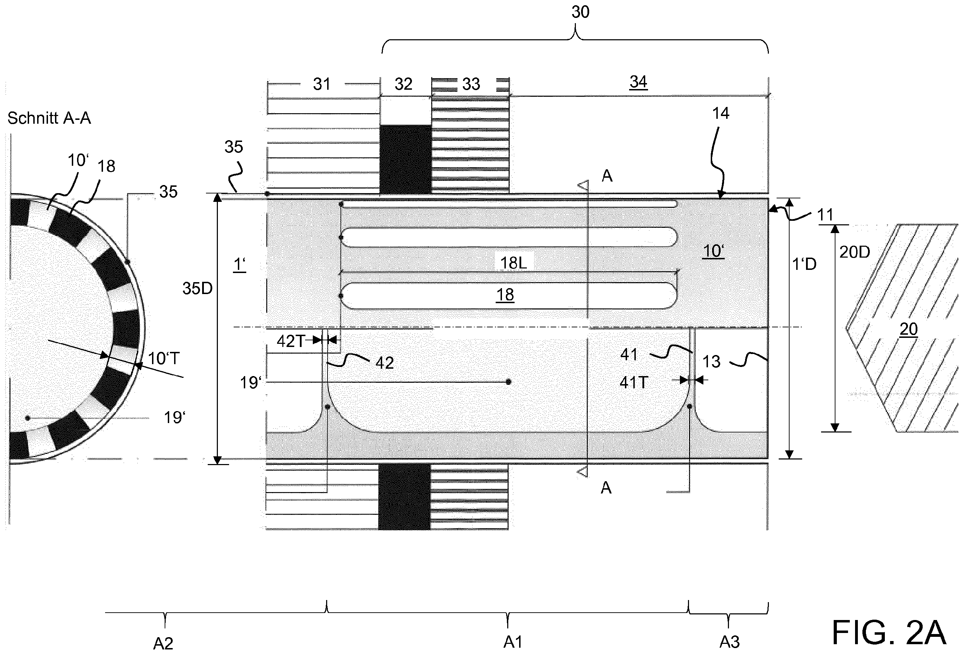

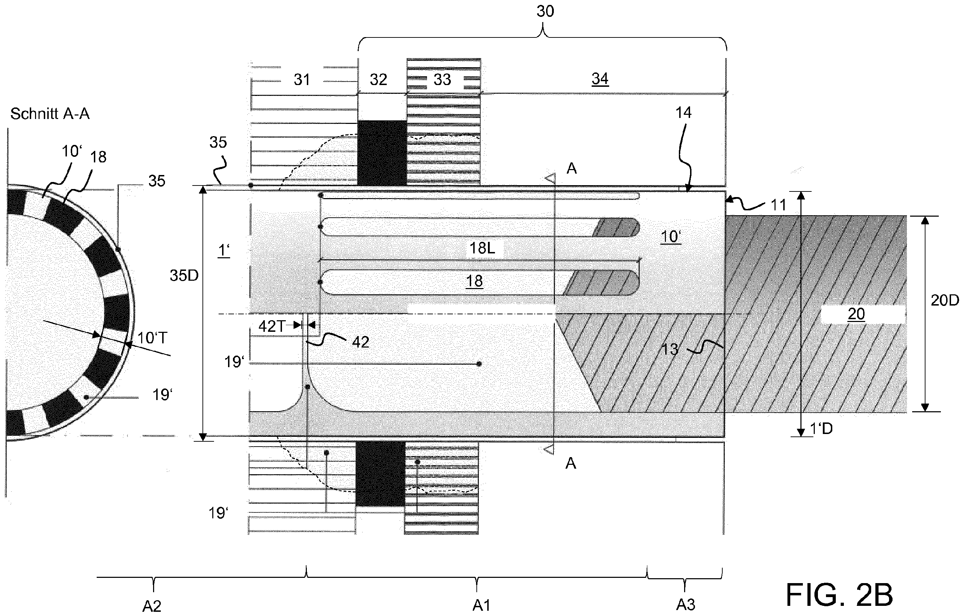

Im Folgenden wird unter Bezugnahme auf Figuren 2A und 2B eine von den Ansprüchen umfasste zweite Ausführungsform eines Verbundabdichtungs-Dübels 1', welcher zur Abdichtung einer Durchdringung 35 durch ein Verbundabdichtungssystem 30 geeignet ist, erläutert. Dabei wird insbesondere auf Unterschiede zur vorstehend beschriebenen ersten Ausführungsform eingegangen und ansonsten auf die Ausführungen zur ersten Ausführungsform verwiesen. Figur 2A zeigt rechts eine Schnittansicht entlang der Längsachse des Verbundabdichtungs-Dübels 1' vor einem Eindrehen einer Schraube 20 und links eine Querschnittsansicht entlang der Schnittlinie A-A durch die rechte Figur. Figur 2B zeigt die gleichen Ansichten nach Eindrehen der Schraube 20.

In der zweiten Ausführungsform ist die Dichtschicht 32 des Verbundabdichtungssystems 30 anders als in der ersten Ausführungsform nicht durch eine Abdichtungsbahn sondern durch eine 2 mm dicke Schicht eines ehemals flüssigen Abdichtungsstoffs gebildet, welcher auf eine Trockenbauwand 31 aufgebracht worden ist. Der Fliesenkleber 33 und die Fliesen 34 des Verbundabdichtungssystems 30 entsprechen hingegen der ersten Ausführungsform.

Auch der Verbundabdichtungs-Dübel 1' gemäß der zweiten Ausführungsform weist einen hohlzylindrischen Grundkörper 10' aus Polyamid und in axialer Richtung an einem ersten Ende 11 eine Öffnung 13 zur Aufnahme einer Schraube 20 auf.

In den Figuren 2A und 2B ist der Grundkörper 10' jeweils nicht über seine ganze Länge gezeigt; so ist insbesondere ein dem ersten Ende 11 gegenüberliegendes Ende nicht gezeigt. Hier kann der Grundkörper 10' aber eine Form aufweisen, welche der Form des Grundkörpers 10 gemäß der ersten Ausführungsform im Abschnitt A2 (welcher frei von Dichtstoff ist) entspricht. Insbesondere kann der Grundkörper 10' an seinem dem ersten Ende 11 in axialer Richtung gegenüberliegenden zweiten Ende geschlossen sein.

Im Unterschied zur ersten Ausführungsform weist der Grundkörper 10' in seinem Inneren einen pastösen Dichtstoff 19' aus MS-Polymer auf. An seiner in radialer Richtung äußeren Oberfläche ist der Grundkörper 10' frei von dem pastösen Dichtstoff 19'. Das Vorhandensein dieses Dichtstoffes 19' legt auch in dieser Ausführungsform einen (ersten) Abschnitt A1 des Grundkörpers 10' in axialer Richtung fest. Eine Außenwand des Grundkörpers 10' weist in diesem Abschnitt A1 zwölf Langlöcher 18 auf, die voneinander in Umfangsrichtung des Grundkörpers 10' gleichmäßig verteilt angeordnet sind. Längsachsen der Langlöcher 18 sind in axialer Richtung des Grundkörpers 10' orientiert. Die Länge 18L der Langlöcher 18 beträgt in der gezeigten Ausführungsform jeweils 13 mm und übertrifft somit die Dicke herkömmlicher Verbundabdichtungssysteme 30.

In der gezeigten Ausführungsform wird der (erste) Abschnitt A1, in welchem der pastöse Dichtstoff 19' angeordnet ist, durch erste und zweite Trennwände 41, 42 begrenzt. Die erste Trennwand 41 schließt den pastösen Dichtstoff 19' gegenüber der Öffnung 13 des Grundkörpers 10' ab, und die zweite Trennwand 42 schließt den pastösen Dichtstoff 19' gegenüber einem (zweiten) Abschnitt A2 des Grundkörpers 10' ab, der frei von Dichtstoff ist. Durch die Verwendung der Trennwände 41, 42 kann die Menge an benötigtem pastösen Dichtstoff 19' gering gehalten werden. Weiter kann so ein unerwünschtes Austreten oder Austrocknen des pastösen Dichtstoff 19' vermieden werden. In der gezeigten Ausführungsform wurde die zweite Trennwand 42 vor einem Einfüllen von pastösem Dichtstoff 19' und die erste Trennwand 41 nach einem Einfüllen von pastösem Dichtstoff 19' mit einer Innenwand des Grundkörpers 10' verschweißt. Wie gut aus Figur 2A ersichtlich, weisen die Trennwände 41 und 42 Wandstärken 41T und 42T auf, welche lediglich 15 % einer mittleren Wandstärke 10'T des Grundkörpers 10' entsprechen. Dabei wird unter einer mittleren Wandstärke 10'T (entspricht hier der mittleren Dicke der Außenwand) des Grundkörpers 10' der radiale Abstand zwischen einem von einer radial außenliegenden Mantelfläche 14 des Grundkörpers 10' festgelegten kleinsten Kreis zu einem von einer radial innenliegenden Mantelfläche des Grundkörpers 10' festgelegten größten Kreis verstanden, wobei die Mittelpunkte beider Kreise zusammenfallen. In der Folge können die Trennwände 41 und 42 leicht von der Schraube 20 durchdrungen werden.

Ein weiterer Unterschied zwischen der ersten und der zweiten Ausführungsform ist, dass der Abschnitt A3, welcher frei von Dichtstoff ist, und dem ersten Ende 11 des Grundkörpers 10' mit der Öffnung 13 benachbart ist, in der zweiten Ausführungsform eine wesentlich größere Längserstreckung von rund 4 mm und keinen Flansch aufweist. Durch die größere Länge dieses Abschnitts A3 wird vermieden, dass pastöser Dichtstoff 19' aus der Durchdringung 35 herausgedrückt wird.

Beim Einführen der Schraube 20 in die Öffnung 13 des Grundkörpers 10' presst die Schraube zunächst eine Außenwand des Grundkörpers 10' im Abschnitt A3 nach außen und sorgt so für eine gewisse Pressdichtung zu einer Innenwand der Durchdringung 35. Anschließend zerstört die Schraube 20 die erste Trennwand 41 und presst den pastösen Dichtstoff 19' über die Langlöcher 18 nach außerhalb des Grundkörpers 10', da der pastöse Dichtstoff 19' von der zweiten Trennwand 42 daran gehindert wird, in axialer Richtung auszuweichen. Eine sich hierdurch ergebende Verfüllzone für den pastösen Dichtstoff 19' ist in Figur 2B schematisch gezeigt. Auch in der zweiten Ausführungsform erstreckt sich die Verfüllzone nicht nur im Bereich der Dichtschicht 32 des Verbundabdichtungssystems 30, sondern in axialer Richtung der Durchdringung 35 zusätzlich zu beiden Seiten der Dichtschicht 32. Somit wirkt der Verbundabdichtungs-Dübel 1 auch hier schichtübergreifend. Anschließend zerstört die Schraube 20 auch die zweite Trennwand 42 und dringt in den von Dichtstoff freien Abschnitt A2 des Grundkörpers 10' vor. Der letztgenannte Abschnitt A2 dient insbesondere der mechanischen Befestigung des Verbundabdichtungs-Dübels 1' in der Durchdringung 35.

Auch in der zweiten Ausführungsform ist ein Außendurchmesser 20D der Schraube 20 an einen Innendurchmesser des Grundkörpers 10' des Verbundabdichtungs-Dübels 1' und ein Außendurchmesser 1'D des Verbundabdichtungs-Dübels 1' an einen Innendurchmesser 35D der Durchdringung 35 anzupassen und somit geeignet zu wählen.

Auch wenn in der vorstehend beschriebenen zweiten Ausführungsform Langlöcher vorgesehen wurden, um einen radialen Austritt des pastösen Dichtstoffes aus dem Grundkörper des Verbundabdichtungs-Dübels zu ermöglichen, erkennt der Fachmann, dass die Erfindung nicht auf die Verwendung von Langlöchern beschränkt ist. Vielmehr ist es möglich, anstelle der Langlöcher Schwächungen vorzusehen, in denen eine Dicke der Außenwand um wenigstens 50 % gegenüber einer mittleren Dicke der Außenwand reduziert ist. In der Folge reißen diese Schwächungen beim Eindrehen der Schraube aufgrund des auf den pastösen Dichtstoff ausgeübten Drucks auf und geben den Dichtstoff radial nach außerhalb des Grundkörpers frei. Dabei erkennt der Fachmann, dass es für eine einwandfreie Funktionsweise erforderlich ist, dass der Widerstand, welcher dem pastösen Dichtstoff in axialer Richtung entgegen gesetzt wird, größer sein muss, als der Widerstand, den die Schwächungen dem pastösen Dichtstoff entgegensetzen. In der Folge müsste die zweite Trennwand wesentlich dicker ausgeführt werden, als in Figuren 2A und 2B gezeigt und vorstehend beschrieben.

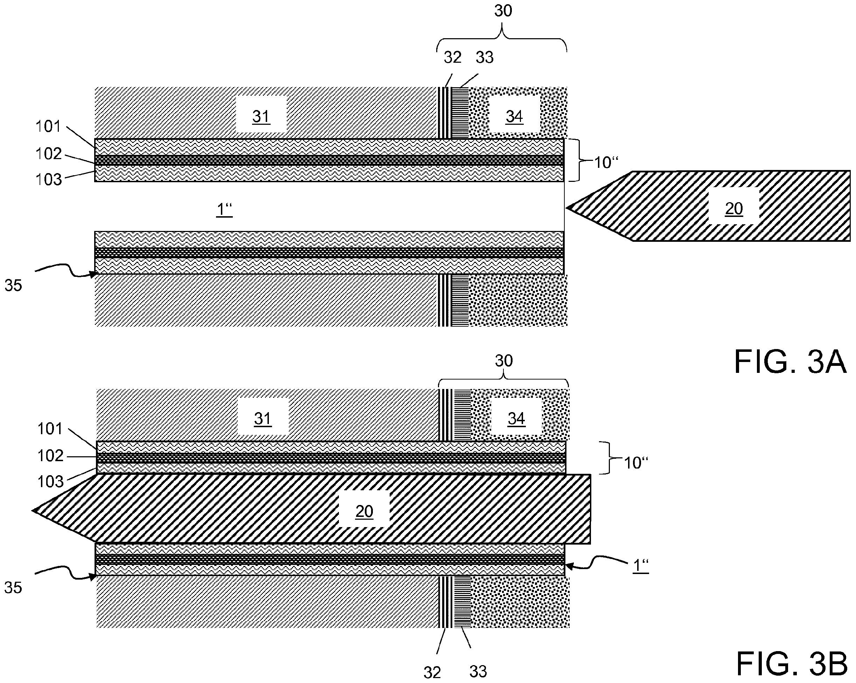

Im Folgenden wird unter Bezugnahme auf Figuren 3A und 3B eine von den Ansprüchen umfasste dritte Ausführungsform eines Verbundabdichtungs-Dübels 1", welcher zur Abdichtung einer Durchdringung 35 durch ein Verbundabdichtungssystem 30 geeignet ist, erläutert. Dabei wird insbesondere auf Unterschiede zur vorstehend beschriebenen ersten Ausführungsform eingegangen und ansonsten auf die Ausführungen zur ersten Ausführungsform verwiesen. Figur 3A zeigt eine Schnittansicht entlang der Längsachse des Verbundabdichtungs-Dübels 1" vor einem Eindrehen einer Schraube 20 und Figur 3B zweigt die gleiche Ansicht nach Eindrehen der Schraube 20.

Das Verbundabdichtungssystem 30 entspricht dem Verbundabdichtungssystem der ersten Ausführungsform und weist eine auf einer Mauer 31 aufgebrachte Abdichtungsbahn 32 auf, welche mittels Fliesenkleber 33 Fliesen 34 trägt.

Im Unterschied zur ersten Ausführungsform ist der hohlzylindrische Grundkörper 10" des Verbundabdichtungs-Dübels 1" an seinen radial innenliegenden und außenliegenden Flächen aus Elastomer-Schichten 101, 103 aus Gummi gebildet. Damit weist der Verbundabdichtungs-Dübel 1" sowohl entlang seiner ganzen axialen Erstreckung als auch in Umfangsrichtung an seinen Außenflächen Elastomer auf. In der gezeigten Ausführungsform ist zwischen den Elastomer-Schichten 101, 103 ein Kern aus einer Polyamid-Schicht 102 mit einer in radialer Richtung gemessenen Wandstärke von 0,5 mm vorgesehen, welcher dem Verbundabdichtungs-Dübel 1" in axialer Richtung Stabilität verleiht und verhindert, dass eine Schraube die Elastomer-Schichten 101, 103 vollständig zerstören kann. Die Dicke der Elastomer-Schichten 101, 103 an den Außenflächen des Verbundabdichtungs-Dübels 1 "beträgt ausgehend von der Polyamid-Schicht 102 in radialer Richtung gemessen sowohl zur Durchdringung 35 als auch zur Schraube 20 jeweils 1,5 mm.

Bei Eindrehen der Schraube 20 wird das Elastomer über alle Schichten des Verbundabdichtungssystems 30 hinweg an die Innenwand der Durchdringung 35 sowie die Außenwand der Schraube 20 gepresst und dichtet die Durchdringung 35 so vollständig gegen ein Eindringen von Wasser ab.

In der dritten Ausführungsform weist der Verbundabdichtungs-Dübel 1" anders als in der ersten Ausführungsform keinen seine Öffnung 13 für die Schraube 20 umgebenden Flansch auf. Ein solcher kann optional aber vorgesehen sein. Weiter weist der Verbundabdichtungs-Dübel 1" anders als in Figur 1 gezeigt keine Spitze auf, sondern ist hohlzylindrisch ausgebildet. Eine Spitze kann aber vorgesehen sein, um ein Einbringen des Verbundabdichtungs-Dübels 1" in die Durchdringung 35 zu erleichtern.

Auch wenn die erste, zweite und dritte Ausführungsform vorstehend getrennt erläutert worden sind, ist es für den Fachmann offensichtlich, dass alle Ausführungsformen auch miteinander kombiniert werden können. In einem solchen Fall weist der Verbundabdichtungs-Dübel der ersten oder dritten Ausführungsform in seinem Inneren zusätzlich pastöses Dichtmaterial und in der Mantelfläche entsprechende Öffnungen / Schwächungen auf, welche ein radiales Austreten des pastösen Dichtmaterials beim Einschrauben einer Schraube erlauben. Auch Trennwände können vorgesehen sein, welche das pastöse Dichtmaterial begrenzen. Alternativ kann der Verbundabdichtungs-Dübel der zweiten Ausführungsform an seiner radial außenliegenden und/oder radial innenliegenden Mantelfläche benachbart zur Öffnung für die Schraube einen insbesondere ringförmigen elastischen Dichtstoff aufweisen, welcher beim Einschrauben einer Schraube eine Pressdichtung zur Innenwand der Durchdringung bzw. zur Schraube herstellt und so vermeidet, dass aus dem Verbundabdichtungs-Dübel herausgedrückter pastöser Dichtstoff aus der Durchdringung austritt.

Zusammenfassend offenbart das vorliegende Dokument einen Verbundabdichtungs-Dübel zur Abdichtung einer Durchdringung durch ein Verbundabdichtungssystem, mit einem hohlzylindrischen Grundkörper. Dabei weist der Grundkörper in axialer Richtung an einem ersten Ende eine Öffnung zur Aufnahme einer Schraube auf. Weiter weist der Grundkörper wenigstens in einem Abschnitt einen elastischen oder plastischen Dichtstoff auf, wobei der Dichtstoff 19, 19' aus einem Material gebildet ist, welches sich von dem Material, aus welchem der Grundkörper gebildet ist, unterscheidet und beim Einschrauben der Schraube in den Verbundabdichtungs-Dübel radial nach außerhalb des Grundkörpers gedrückt wird. Gemäß einer alternativen Ausführungsform ist der ganze Grundkörper aus elastischem Dichtstoff gebildet.

Dabei gewährleistet der Verbundabdichtungs-Dübel und die Schraube in ihrem Zusammenwirken, dass eine für eine jeweilige Beanspruchungsklasse des Verbundabdichtungssystems geforderte Dichtigkeit auch im Bereich der Durchdringung sichergestellt ist.

## Patentansprüche

1. Verbundabdichtungs-Dübel (1') mit einem hohlzylindrischen Grundkörper (10'), wobei der Grundkörper (10') in axialer Richtung an einem ersten Ende (11) eine Öffnung (13) zur Aufnahme einer Schraube (20) aufweist,
wobei der Grundkörper (10') ausschließlich in seinem Inneren einen pastösen Dichtstoff (19') aufweist,
wobei eine Außenwand des Grundkörpers (10') mehrere Durchbrüche und/oder Schwächungen (18) aufweist, und
wobei sich die Durchbrüche und/oder Schwächungen (18) in axialer Richtung des Grundkörpers (10) über zwischen 10 mm und 15 mm erstrecken; und/oder wobei sich die Durchbrüche und/oder Schwächungen (18), in axialer Richtung über zwischen 20 % und 70 % der Gesamtlänge des Grundkörpers (10; 10') oder über zwischen 30 % und 60 % der Gesamtlänge des Grundkörpers (10; 10') oder über zwischen 40 % und 50 % der Gesamtlänge des Grundkörpers (10; 10') erstrecken.

2. Verbundabdichtungs-Dübel (1') nach Anspruch 1,
wobei die Durchbrüche und/oder Schwächungen (18) voneinander in Umfangsrichtung des Grundkörpers (10') beabstandet sind; und/oder wobei die Durchbrüche und/oder Schwächungen (18) in Umfangsrichtung gleichmäßig um den Grundkörper (10') herum verteilt angeordnet sind; und/oder
wobei die Durchbrüche (18) Langlöcher sind, deren Längsachsen in axialer Richtung des Grundkörpers (10') orientiert sind oder mit der axialen Richtung des Grundkörpers (10') einen Winkel von zwischen 5 ° und 60 ° einschließen oder mit der axialen Richtung des Grundkörpers (10') einen Winkel von zwischen 5 ° und 30° einschließen;
wobei die Schwächungen Langnuten sind, deren Längsachsen in axialer Richtung des Grundkörpers (10') orientiert sind oder mit der axialen Richtung des Grundkörpers (10') einen Winkel von zwischen 5 ° und 60 ° einschließen oder mit der axialen Richtung des Grundkörpers (10') einen Winkel von zwischen 5 ° und 30 ° einschließen.

3. Verbundabdichtungs-Dübel (1') nach Anspruch 1 oder 2,
wobei der Grundkörper (10') eine erste Trennwand (41) aufweist, welche zwischen dem pastösen Dichtstoff (19') und dem ersten Ende (11) des Grundkörpers (10') angeordnet ist, und den pastösen Dichtstoff (19') gegenüber der Öffnung (13) des Grundkörpers (10') abschließt; und
wobei der Grundkörper (10') optional eine zweite Trennwand (42) aufweist, welche in axialer Richtung von der ersten Trennwand (41) beabstandet ist, und wobei der pastöse Dichtstoff (19') zwischen der ersten Trennwand (41) und der optionalen zweiten Trennwand (42) angeordnet ist.

4. Verbundabdichtungs-Dübel (1') nach Anspruch 3,
wobei eine Dicke (41T, 42T) der Trennwand (41, 42) gegenüber einer mittleren Dicke (10'T) der Außenwand des Grundkörpers (10') um wenigstens 50 % oder um wenigstens 75% oder um wenigstens 90% reduziert ist,
wobei die mittlere Dicke (10'T) der Außenwand des Grundkörpers (10') der radiale Abstand zwischen einem von einer radial außenliegenden Mantelfläche des Grundkörpers (10') festgelegten kleinsten Kreis zu einem von einer radial innenliegenden Mantelfläche des Grundkörpers (10') festgelegten größten Kreis ist, wobei die Mittelpunkte beider Kreise zusammenfallen.

5. Verbundabdichtungs-Dübel (1') nach einem der Ansprüche 1 bis 4, wobei der pastöse Dichtstoff (19') ein Butylkautschuk-Dichtstoff oder ein Polysulfid-Dichtstoff oder ein Silikon-Dichtstoff oder ein Polyurethan-Dichtstoff oder ein MS-Polymer-Dichtstoff oder ein Harz ist.

6. Verbundabdichtungs-Dübel (1; 1') nach einem der Ansprüche 1 bis 5,
wobei der Grundkörper (10; 10') in axialer Richtung einen Abschnitt (A3) aufweist, in dem der Grundkörper (10; 10') frei von Dichtstoff (19; 19') ist, wobei dieser Abschnitt (A3) an das erste Ende (11) des Grundkörpers (10; 10') angrenzt, und sich von dem ersten Ende um zwischen 1 mm und 10 mm oder um zwischen 2,5 mm und 8 mm oder um zwischen 3 mm und 6 mm in axialer Richtung erstreckt.

7. Verbundabdichtungs-Dübel (1; 1') nach einem der Ansprüche 1 bis 6, wobei der Grundkörper (10; 10') aus Kunststoff, insbesondere aus Polyamid, oder Metall gebildet ist.

8. Verbundabdichtungs-Dübel (1") mit einem hohlzylindrischen Grundkörper (10'),
wobei der Grundkörper (10") in axialer Richtung an einem ersten Ende (11) eine Öffnung (13) zur Aufnahme einer Schraube (20) aufweist,
wobei der Grundkörper (10") an seinen radial innenliegenden und radial außenliegenden Außenflächen jeweils Elastomer-Schichten (101, 103) aufweist, die jeweils in axialer Richtung und Umfangsrichtung des Verbundabdichtungs-Dübels durchgehend ausgebildet sind, und
wobei der Grundkörper (10") zwischen seinen radial innenliegenden und radial außenliegenden Elastomer-Schichten (101, 103) eine Schicht aus Polyamid oder Metall (102) aufweist.

9. Verbundabdichtungs-Dübel (1") nach Anspruch 8, wobei
die Dicke jeder Elastomer-Schicht (101, 103) in radialer Richtung zwischen 1 mm und 3 mm oder zwischen 1,5 mm und 2 mm beträgt; und/oder wobei die Dicke der Schicht aus Polyamid oder Metall (102) in radialer Richtung zwischen 0,25 mm und 1,5 mm oder zwischen 0,4 mm und 0,8 mm beträgt.

10. Verbundabdichtungs-Dübel (1; 1') nach einem der Ansprüche 1 bis 9,
wobei der Grundkörper (10; 10') in einem Abschnitt (A2), der optional frei von Dichtstoff (19; 19') ist, wenigstens ein Paar von in axialer Richtung verlaufenden Schlitzen aufweist, welche eine Mantelfläche des Grundkörpers (10; 10') durchdringen; und/oder
wobei der Grundkörper (10; 10') in einem Abschnitt (A2), der optional frei von Dichtstoff (19; 19') ist, auf seiner radial außenliegenden Mantelfläche in Umfangsrichtung orientierte Rillen aufweist, welche sich in axialer Richtung mit in Umfangsrichtung orientierten Vorsprüngen abwechseln; und/oder wobei der Grundkörper (10; 10') an seinem ersten Ende benachbart zur Öffnung einen radial nach außen gerichteten Flansch aufweist; und/oder wobei der Grundkörper (10; 10') an seinem dem ersten Ende in axialer Richtung gegenüberliegenden zweiten Ende geschlossen ist.

11. System zur Abdichtung einer Durchdringung (35) durch ein Verbundabdichtungssystem (30), aufweisend:
einen in die Durchdringung (35) eingesetzten Verbundabdichtungs-Dübel (1; 1') nach einem der Ansprüche 1 bis 10; und
eine in den Verbundabdichtungs-Dübel (1; 1') eingedrehte Schraube (20),
wobei der Verbundabdichtungs-Dübel (1; 1') und die Schraube (20) gemeinsam ausgebildet sind, eine für eine jeweilige Beanspruchungsklasse des Verbundabdichtungssystems (30) geforderte Dichtigkeit auch im Bereich der Durchdringung (35) sicherzustellen.

## Claims

1. A wall plug for composite waterproofing systems (1') with a hollow cylindrical main body (10'),
wherein the main body (10') has an opening (13) at a first end (11) in the axial direction for receiving a screw (20),
wherein the main body (10') has a pasty sealant (19') exclusively in its interior, wherein an outer wall of the main body (10') has a plurality of apertures and/or weakenings (18), and
wherein the apertures and/or weakenings (18) extend in the axial direction of the main body (10) for between 10 mm and 15 mm; and/or
wherein the apertures and/or weakenings (18) extend in the axial direction over between 20% and 70% of the total length of the main body (10; 10') or over between 30% and 60% of the total length of the main body (10; 10') or over between 40% and 50% of the total length of the main body (10; 10').

2. The wall plug for composite waterproofing systems (1') according to claim 1,
wherein the apertures and/or weakenings (18) are spaced apart from each other in the circumferential direction of the main body (10'); and/or
wherein the apertures and/or weakenings (18) are evenly distributed around the main body (10') in the circumferential direction; and/or
wherein the apertures (18) are elongated holes whose longitudinal axes are oriented in the axial direction of the main body (10') or enclose an angle of between 5° and 60° with the axial direction of the main body (10') or enclose an angle of between 5° and 30° with the axial direction of the main body (10');
wherein the weakenings are elongated grooves whose longitudinal axes are oriented in the axial direction of the main body (10') or enclose an angle of between 5° and 60° with the axial direction of the main body (10') or enclose an angle of between 5° and 30° with the axial direction of the main body (10').

3. The wall plug for composite waterproofing systems (1') according to claim 1 or 2,
wherein the main body (10') has a first partition wall (41) disposed between the pasty sealant (19') and the first end (11) of the main body (10') and closing off the pasty sealant (19') from the opening (13) of the main body (10'); and
wherein the main body (10') optionally has a second partition wall (42) which is axially spaced from the first partition wall (41), and wherein the pasty sealant (19') is arranged between the first partition wall (41) and the optional second partition wall (42).

4. The wall plug for composite waterproofing systems (1') according to claim 3,
wherein a thickness (41T, 42T) of the partition wall (41, 42) is reduced by at least 50% or by at least 75% or by at least 90% compared to an mean thickness (10'T) of the outer wall of the main body (10'),
wherein the mean thickness (10'T) of the outer wall of the main body (10') is the radial distance between a smallest circle defined by a radially outer circumferential surface of the main body (10') and a largest circle defined by a radially inner circumferential surface of the main body (10'), the centres of both circles coinciding.

5. The wall plug for composite waterproofing systems (1') according to any one of claims 1 to 4, wherein the pasty sealant (19') is a butyl rubber sealant or a polysulphide sealant or a silicone sealant or a polyurethane sealant or a MS polymer sealant or a resin.

6. The wall plug for composite waterproofing systems (1; 1') according to any one of claims 1 to 5,
wherein the main body (10; 10') has a section (A3) in the axial direction in which the main body (10; 10') is free of sealant (19; 19'),
said section (A3) being adjacent said first end (11) of said main body (10; 10') and extending in the axial direction from said first end by between 1 mm and 10 mm or by between 2.5 mm and 8 mm or by between 3 mm and 6 mm.

7. The wall plug for composite waterproofing systems (1; 1') according to any one of claims 1 to 6, wherein the main body (10; 10') is formed from plastic, in particular polyamide, or metal.

8. The wall plug for composite waterproofing systems (1") with a hollow cylindrical main body (10'),
wherein the main body (10") has an opening (13) at a first end (11) in the axial direction for receiving a screw (20),
wherein the main body (10") has elastomer layers (101, 103) on its radially inner and radially outer exterior surfaces, which are each formed continuously in the axial direction and circumferential direction of the wall plug for composite waterproofing systems, and
wherein the main body (10") has a layer of polyamide or metal (102) between its radially inner and radially outer elastomer layers (101, 103).

9. The wall plug for composite waterproofing systems (1") according to claim 8, wherein
the thickness of each elastomer layer (101, 103) is between 1 mm and 3 mm or between 1.5 mm and 2 mm in the radial direction; and/or
wherein the thickness of the layer of polyamide or metal (102) is between 0.25 mm and 1.5 mm or between 0.4 mm and 0.8 mm in the radial direction.

10. The wall plug for composite waterproofing systems (1; 1') according to any one of claims 1 to 9,
wherein the main body (10; 10') in a section (A2) that is optionally free of sealant (19; 19') has at least one pair of axially extending slits that penetrate a circumferential surface of the main body (10; 10'); and/or
wherein the main body (10; 10') in a section (A2) which is optionally free of sealant (19; 19') has circumferentially oriented grooves on its radially outer circumferential surface, which grooves alternate in the axial direction with circumferentially oriented projections; and/or
wherein the main body (10; 10') has a radially outwardly directed flange at its first end adjacent the opening; and/or
wherein the main body (10; 10') is closed at its second end opposite the first end in the axial direction.

11. System for sealing a penetration (35) through a composite waterproofing system (30), comprising:
a wall plug for composite waterproofing systems (1; 1') according to any one of claims 1 to 10 that is inserted into the penetration (35); and
a screw (20) screwed into the wall plug for composite waterproofing systems (1; 1'),
wherein the wall plug for composite waterproofing systems (1; 1') and the screw (20) in combination are designed to ensure a tightness required for a respective stress class of the composite waterproofing system (30) also in the area of the penetration (35).

## Revendications

1. Cheville d'étanchéité pour matériau composite (1') avec un corps de base cylindrique creux (10'), dans lequel le corps de base (10') a une ouverture (13) dans la direction axiale à une première extrémité (11) pour recevoir une vis (20), le corps de base (10') ayant un produit d'étanchéité pâteux (19') exclusivement dans son intérieur,
dans lequel une paroi extérieure du corps de base (10') présente une pluralité d'ouvertures et/ou d'affaiblissements (18), et
dans lequel les ouvertures et/ou les affaiblissements (18) s'étendent dans la direction axiale du corps de base (10) sur une longueur comprise entre 10 mm et 15 mm ; et/ou dans lequel les ouvertures et/ou les affaiblissements (18) s'étendent dans la direction axiale sur une longueur comprise entre 20 % et 70 % de la longueur totale du corps de base (10; 10') ou sur une longueur comprise entre 30 % et 60 % de la longueur totale du corps de base (10; 10') ou sur une longueur comprise entre 40 % et 50 % de la longueur totale du corps de base (10; 10').

2. Cheville d'étanchéité pour matériau composite (1') selon la revendication 1, dans lequel les ouvertures et/ou affaiblissements (18) sont espacés les uns des autres dans la direction circonférentielle du corps de base (10'); et/ou
dans lequel les ouvertures et/ou les affaiblissements (18) sont uniformément répartis autour du corps de base (10') dans la direction circonférentielle; et/ou dans lequel les ouvertures (18) sont des trous allongés dont les axes longitudinaux forment un angle compris entre 5° et 60° dans la direction axiale du corps de base (10') ou forment un angle compris entre 5° et 30° avec la direction axiale du corps de base (10');
dans lequel les affaiblissements sont des rainures longitudinales dont les axes longitudinaux sont orientés dans la direction axiale du corps de base (10') ou forment un angle compris entre 5° et 60° avec la direction axiale du corps de base (10') ou forment un angle compris entre 5° et 30° avec la direction axiale du corps de base (10').

3. Cheville d'étanchéité pour matériau composite (1') selon la revendication 1 ou 2, dans laquelle le corps de base (10') a une première paroi de séparation (41) qui est placée entre l'agent d'étanchéité pâteux (19') et la première extrémité (11) du corps de base (10') et qui ferme l'agent d'étanchéité pâteux (19') de l'ouverture (13) du corps de base (10'); et
dans lequel le corps de base (10') a facultativement une seconde paroi de séparation (42) qui est espacée de la première paroi de séparation (41) dans la direction axiale, et dans lequel le produit d'étanchéité pâteux (19') est disposé entre la première paroi de séparation (41) et la seconde paroi de séparation facultative (42).

4. Cheville d'étanchéité pour matériau composite (1') selon la revendication 3, dans laquelle une épaisseur (41T, 42T) de la paroi de séparation (41, 42) est réduite d'au moins 50% ou d'au moins 75% ou d'au moins 90% par rapport à une épaisseur moyenne (10'T) de la paroi extérieure du corps de base (10'),
dans lequel l'épaisseur moyenne (10'T) de la paroi extérieure du corps de base (10') est la distance radiale entre un cercle le plus petit défini par une surface circonférentielle radialement extérieure du corps de base (10') et un cercle le plus grand défini par une surface circonférentielle radialement intérieure du corps de base (10'), et dans lequel les centres des deux cercles coïncident.

5. Cheville d'étanchéité pour matériau composite (1') de l'une des revendications 1 à 4, dans laquelle le produit d'étanchéité en pâte (19') est un produit d'étanchéité en caoutchouc butyle ou un produit d'étanchéité en polysulfure ou un produit d'étanchéité en silicone ou un produit d'étanchéité en polyuréthane ou un produit d'étanchéité en polymère MS ou une résine.

6. Cheville d'étanchéité pour matériau composite (1; 1') selon l'une des revendications 1 à 5, dans laquelle le corps de base (10; 10') présente une partie (A3) dans la direction axiale dans laquelle le corps de base (10; 10') est exempt de produit d'étanchéité (19; 19'), ladite partie (A3) étant adjacente à l'extrémité (11) du corps de base (10; 10') et s'étendant depuis la première extrémité d'une distance comprise entre 1 mm et 10 mm ou entre 2,5 mm et 8 mm ou entre 3 mm et 6 mm dans la direction axiale.

7. Cheville d'étanchéité pour matériau composite (1; 1') selon l'une des revendications 1 à 6, dans laquelle le corps de base (10; 10') est réalisé en matière plastique, notamment en polyamide, ou en métal.

8. Cheville d'étanchéité pour matériau composite (1") avec un corps de base cylindrique creux (10'), dans laquelle le corps de base (10") a une ouverture (13) dans la direction axiale à une première extrémité (11) pour recevoir une vis (20), le corps de base (10") ayant des couches d'élastomère (101, 103) sur ses surfaces radialement intérieure et radialement extérieure, qui sont chacune formées de manière continue dans la direction axiale et la direction circonférentielle du cheville d'étanchéité pour matériau composite, et
dans lequel le corps de base (10") a une couche de polyamide ou de métal (102) entre ses couches d'élastomère radialement intérieure et radialement extérieure (101, 103).

9. Cheville d'étanchéité pour matériau composite (1") selon la revendication 8, dans laquelle l'épaisseur de chaque couche d'élastomère (101, 103) dans la direction radiale est comprise entre 1 mm et 3 mm ou entre 1,5 mm et 2 mm; et/ou dans laquelle l'épaisseur de la couche de polyamide ou de métal (102) dans la direction radiale est comprise entre 0,25 mm et 1,5 mm ou entre 0,4 mm et 0,8 mm.

10. Cheville d'étanchéité pour matériau composite (1; 1') selon l'une des revendications 1 à 9, dans laquelle le corps de base (10; 10') présente, dans une section (A2) qui est facultativement exempte d'agent d'étanchéité (19; 19'), au moins une paire de fentes s'étendant axialement qui pénètrent dans une surface circonférentielle du corps de base (10; 10'); et/ou
dans lequel le corps de base (10; 10'), dans une section (A2) qui est facultativement exempte d'agent d'étanchéité (19; 19'), présente, sur sa surface circonférentielle radialement extérieure, des rainures orientées circonférentiellement, lesquelles rainures alternent dans la direction axiale avec des saillies orientées circonférentiellement; et/ou
dans lequel le corps de base (10; 10') a une bride dirigée radialement vers l'extérieur à sa première extrémité adjacente à l'ouverture; et/ou dans lequel le corps de base (10; 10') est fermé à sa seconde extrémité opposée à la première extrémité dans la direction axiale.

11. Système pour rendre étanche une pénétration (35) à travers un système d'étanchéité pour matériau composite (30), comprenant:
une cheville d'étanchéité pour matériau composite (1;1') insérée dans la pénétration (35) selon l'une quelconque des revendications 1 à 10; et
une vis (20) vissée dans la cheville d'étanchéité pour matériau composite (1; 1'), dans laquelle la cheville d'étanchéité pour matériau composite (1; 1') et la vis (20) sont conçues conjointement pour assurer une étanchéité requise pour une classe de contrainte respective du système d'étanchéité pour matériau composite (30) aussi dans la région de la pénétration (35).
